(19) Europäisches Patentamt
European Patent Office
Office européen des brevets

(11) **EP 4 343 640 A1**

(12) **EUROPEAN PATENT APPLICATION**

(43) Date of publication:
**27.03.2024 Bulletin 2024/13**

(21) Application number: **22306398.3**

(22) Date of filing: **22.09.2022**

(51) International Patent Classification (IPC):
**G06N 10/20** (2022.01)  **G06N 10/80** (2022.01)
**G06N 3/042** (2023.01)  **G06N 10/60** (2022.01)
**G06N 3/084** (2023.01)

(52) Cooperative Patent Classification (CPC):
**G06N 10/20; G06N 10/60; G06N 10/80;**
G06N 3/084

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **BULL SAS
78340 Les Clayes-Sous-Bois (FR)**

(72) Inventors:
• **MARTIEL, Simon
  33000 BORDEAUX (FR)**
• **OLIVA, Maxime
  78340 Les-Clayes-Sous-Bois (FR)**

(74) Representative: **Plasseraud IP
66, rue de la Chaussée d'Antin
75440 Paris Cedex 09 (FR)**

(54) **METHOD FOR GENERATING A QUANTUM COMPUTING PROGRAM AND APPARATUS FOR IMPLEMENTING THE SAME**

(57)     A computer-implemented method for generating a program to be executed using a quantum computer for producing as output a target quantum state based on an initial quantum state used as input is proposed, which comprises: determining an approximated quantum state which is an approximation of the target quantum state; determining a quantum circuit which, based on the initial quantum state received used as input, produces as output an output quantum state that corresponds to the approximated quantum state; and generating the program based on the determined circuit.

FIG. 1

**Description**

The present subject disclosure relates to the field of quantum computing, in particular to the generation of a quantum computing program executable on a quantum computer.

In the field of quantum computing, a quantum computing program, that is, a program that is executable on a quantum computer can be generated from a quantum circuit that corresponds to the program. Quantum circuit synthesis corresponds to the decomposition of a unitary operator that corresponds to a quantum circuit into a sequence of quantum gates.

However, most of the conventional circuit synthesis algorithms scale exponentially. While various new algorithms have been recently proposed with an objective of reducing computational costs, such new algorithms come at the cost of preparing an approximation of the resulting quantum state, while the scaling of these algorithms still remains exponential with the number of qubits.

There is therefore a need for an improved method for generating a program suitable for execution using a quantum computer that addresses the drawbacks and shortcomings of the conventional technology in the art.

In particular, it is an object of the present subject disclosure to provide an improved method for generating a program suitable for execution using a quantum computer that addresses the drawbacks and shortcomings of the conventional technology in the art.

Another object of the present subject disclosure is to provide a method for generating a program suitable for execution using a quantum computer with improved computational cost efficiency.

To achieve these objects and other advantages and in accordance with the purpose of the present subject disclosure, as embodied and broadly described herein, in one aspect of the present subject disclosure, a computer-implemented method for generating a program to be executed using a quantum computer for producing as output a target quantum state based on an initial quantum state used as input is proposed.

The proposed method may comprise: determining an approximated quantum state which is an approximation of the target quantum state; determining a quantum circuit which, based on the initial quantum state used as input, produces as output an output quantum state that corresponds to the approximated quantum state; and generating the program based on the determined circuit.

Advantageously, instead of generating a desired quantum circuit directly from a target quantum state that represents the program to be generated which would be computationally expensive, the proposed method first determines an approximation of the target quantum state, and uses this approximation for quantum circuit synthesis to determine a quantum circuit that produces an output which approximates the approximation of the target quantum state. This decomposition of the quantum circuit synthesis into two phases advantageously yields a numerically efficient quantum circuit synthesis scheme. For example, the proposed scheme may in some embodiment scale polynomially, while still allowing for a fast generation of quantum circuits producing an approximation of a given target quantum state that represents the program to be generated.

Indeed, instead of finding an approximate decomposition of a unitary operator that corresponds to a quantum circuit, leading to an approximate prepared state, the proposed scheme is initiated with the determination of an approximate state, and seeks to optimize the circuit which prepares it, which advantageously allows exploring a class of circuits that are inherently efficient to simulate, and capable of capturing exactly the approximated state.

In one or more embodiments, the approximated quantum state is determined using a simulation of an input quantum circuit. In some embodiments, the input quantum circuit may be described by a sequence of gates acting on one or more qubits, and the method may further comprise: determining a representation of the initial quantum state, and iteratively updating the representation by successively applying a gate of the sequence of gates to the representation, and determining a representation of the approximated quantum state based on the updated representation of the initial quantum state.

In one or more embodiments, the approximated quantum state may be determined using a representation of the target quantum state. In some embodiments, the representation of the target quantum state may be of the matrix product state (MPS) type. For example, in some embodiments, the target quantum state may be represented as a linear combination of basis states $|\sigma\rangle$ of the 1-qbit Hilbert space (i.e. $|\sigma\rangle \in \{|0\rangle, |1\rangle\}$):

$$|\psi_{target}\rangle = \sum_{\sigma_1,\dots,\sigma_N} C_{\sigma_1,\dots,\sigma_N} |\sigma_1\rangle \otimes \dots \otimes |\sigma_N\rangle,$$

where $C_{\sigma_1,\dots,\sigma_N}$ is a complex-valued tensor indexed by $\sigma_i \in \{0, 1\}$,
and the approximated quantum state may be of the following MPS form:

$$|\widetilde{\psi_{target}}\rangle = \sum_{\substack{\sigma_1,...,\sigma_N \\ \chi_0,...,\chi_N}} A^{[1]\sigma_1}_{\chi_0,\chi_1} A^{[2]\sigma_2}_{\chi_1,\chi_2}...A^{[N]\sigma_N}_{\chi_{N-1},1} |\sigma_1\rangle \otimes...\otimes |\sigma_N\rangle$$

wherein the terms $A^{[n]\sigma_i}_{\chi_{i-1},\chi_i}$ are obtained via successive singular value decomposition of the $C_{\sigma_1,...,\sigma_N}$ tensor, $\chi_i$ is a bond dimension between each tensors, and each $\chi_i$ is bounded by a maximum bond dimension $\chi_{max} : \chi_i < \chi_{max}$.

In one or more embodiments, the proposed method further comprises, for determining the quantum circuit: determining parameters of a parameterized circuit represented by a tensor network, TN. In such embodiments, the method may further comprise, for determining the parameters of the parameterized circuit: minimizing a cost function that measures a distance between a tensor network quantum state produced by the parameterized circuit receiving as input the initial quantum state, and the target quantum state or the approximated quantum state. In some embodiments, the cost function may be minimized using a gradient-descent propagation algorithm. In some embodiments, the cost function may be minimized using a backpropagation optimization algorithm.

In one or more embodiments, the initial quantum state may be the state $|0\rangle$.

According to another aspect of the present subject disclosure, an apparatus (e.g. a processing node in a non-quantum computer system) is proposed, which comprises a processor, and a memory operatively coupled to the processor. The proposed apparatus is configured to perform embodiments of the proposed method according to the present subject disclosure.

According to yet another aspect of the present subject disclosure, a non-transitory computer-readable medium encoded with executable instructions which, when executed on a non-quantum computer, causes a processor of the non-quantum computer, that is operatively coupled with a memory, to perform embodiments of the proposed method according to the present subject disclosure, is proposed.

According to yet another aspect of the present subject disclosure, a computer program product comprising computer program code tangibly embodied in a computer readable medium, said computer program code comprising instructions to, when provided to a non-quantum computer system and executed, cause said computer to perform embodiments of the proposed method according to the present subject disclosure, is proposed.

Advantages of the present subject disclosure also include, without limitation:
In non-quantum machine learning, data are typically represented as real vectors, whereas quantum machine-learning algorithms rely on the preparation of a quantum state (which can be represented by a complex vector) which is proportional to a corresponding real vector. As a consequence, many quantum machine learning algorithms rely on the preparation of a quantum state by encoding classical data, that is, non-quantum data (data that do not correspond to a quantum state) that, once generated, are used to execute an algorithm on a quantum computer. This quantum state preparation is then called several times during the execution of the algorithm, and largely contributes to a high final complexity of the algorithm. On an imperfect quantum computer, this overhead will degrade algorithmic performance.

The proposed scheme can advantageously be used to generate alternative state preparations that produce quantum states which are approximations of a target quantum state. This approximation might lead to a degradation of the algorithmic performance, but is instead largely compensated for by the efficiency of the algorithm itself.

As a consequence, the proposed scheme can advantageously be used to replace parts of quantum algorithms by approximate versions of these parts while increasing overall algorithmic performances.

It should be appreciated that the present invention can be implemented and utilized in numerous ways, including without limitation as a process, an apparatus, a system, a device, and as a method for applications now known and later developed. These and other unique features of the system disclosed herein will become more readily apparent from the following description and the accompanying drawings.

## Brief description of the drawings

The present subject disclosure will be better understood and its numerous objects and advantages will become more apparent to those skilled in the art by reference to the following drawings, in conjunction with the accompanying specification, in which:

Figure 1 is a block diagram illustrating an exemplary method for generating a program, in accordance with one or more embodiments;
Figure 2 is a flow chart illustrating an exemplary method for generating a program, in accordance with one or more embodiments;
Figure 3 is a diagram illustrating an exemplary architecture of a computer system for implementing the proposed method, in accordance with one or more embodiments.

## Description of embodiments

The advantages, and other features of the components disclosed herein, will become more readily apparent to those having ordinary skill in the art form. The following detailed description of certain preferred embodiments, taken in conjunction with the drawings, sets forth representative embodiments of the subject technology, wherein like reference numerals identify similar structural elements.

For simplicity and clarity of illustration, the drawing figures illustrate the general manner of construction, and descriptions and details of well-known features and techniques may be omitted to avoid unnecessarily obscuring the discussion of the described embodiments of the subject disclosure. Additionally, elements in the drawing figures are not necessarily drawn to scale. For example, the dimensions of some of the elements in the figures may be exaggerated relative to other elements to help improve understanding of embodiments of the present subject disclosure. Certain figures may be shown in an idealized fashion in order to aid understanding, such as when structures are shown having straight lines, sharp angles, and/or parallel planes or the like that under real-world conditions would likely be significantly less symmetric and orderly.

In addition, it should be apparent that the teaching herein can be embodied in a wide variety of forms and that any specific structure and/or function disclosed herein is merely representative. In particular, one skilled in the art will appreciate that an aspect disclosed herein can be implemented independently of any other aspects and that several aspects can be combined in various ways.

The present disclosure is described below with reference to functions, engines, block diagrams and flowchart illustrations of the methods, systems, and computer program according to one or more exemplary embodiments. Each described function, engine, block of the block diagrams and flowchart illustrations can be implemented in hardware, software, firmware, middleware, microcode, or any suitable combination thereof. If implemented in software, the functions, engines, blocks of the block diagrams and/or flowchart illustrations can be implemented by computer program instructions or software code, which may be stored or transmitted over a computer-readable medium, or loaded onto a general purpose non quantum computer, special purpose non quantum computer or other programmable data processing apparatus to produce a machine, such that the computer program instructions or software code which execute on the non quantum computer or other programmable data processing apparatus, create the means for implementing the functions described herein.

Embodiments of computer-readable media includes, but are not limited to, both computer storage media and communication media including any medium that facilitates transfer of a computer program from one place to another. As used herein, a "computer storage media" may be any physical media that can be accessed by a computer. Examples of computer storage media include, but are not limited to, a flash drive or other flash memory devices (e.g. memory keys, memory sticks, key drive), CD-ROM or other optical storage, DVD, magnetic disk storage or other magnetic storage devices, memory chip, RAM, ROM, EEPROM, smart cards, Solid State Drive (SSD) devices or Hard Disk Drive (HDD) devices, or any other suitable medium from that can be used to carry or store program code in the form of instructions or data structures which can be read by a computer processor. Also, various forms of computer-readable media may transmit or carry instructions to a computer, including a router, gateway, server, or other transmission device, wired (coaxial cable, fiber, twisted pair, DSL cable) or wireless (infrared, radio, cellular, microwave). The instructions may comprise code from any computer-programming language, including, but not limited to, assembly, C, C++, Visual Basic, HTML, PHP, Java, Javascript, Python, and bash scripting.

Unless specifically stated otherwise, it will be appreciated that throughout the following description discussions utilizing terms such as processing, computing, calculating, determining, generating, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

The terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

Additionally, the word "exemplary" as used herein means serving as an example, instance, or illustration. Any aspect or design described herein as "exemplary" is not necessarily to be construed as preferred or advantageous over other aspects or designs.

In the following description and claims, the notation "$|0\rangle$" designates the quantum state "ket-zero" that may be used as an initial quantum state in embodiments of the present subject disclosure.

In quantum computing, a computing operation may be described by its result modeled in the form of a target

quantum state (denoted $|\psi_{target}\rangle$). Obtaining a direct description of such target quantum state is typically not considered for achieving this state, as describing the target quantum state as a complex vector is inherently inefficient as it comes at an exponential computational cost.

For this reason, another approach for preparing a target quantum state focuses on a quantum circuit capable of preparing the desired target quantum state. The quantum circuit may be described as the decomposition of a unitary operator U (that corresponds to the quantum circuit) into a sequence of one or more quantum gates $U_1$, ..., $U_n$, and operating on an initial quantum state (e.g. $|0\rangle$) comprising one or two qubits. Therefore the target quantum state may be described as the output of the quantum circuit operating on the initial quantum state, for example according to the following equation:

$$|\psi_{target}\rangle = U_n \cdots U_1 |0\rangle$$

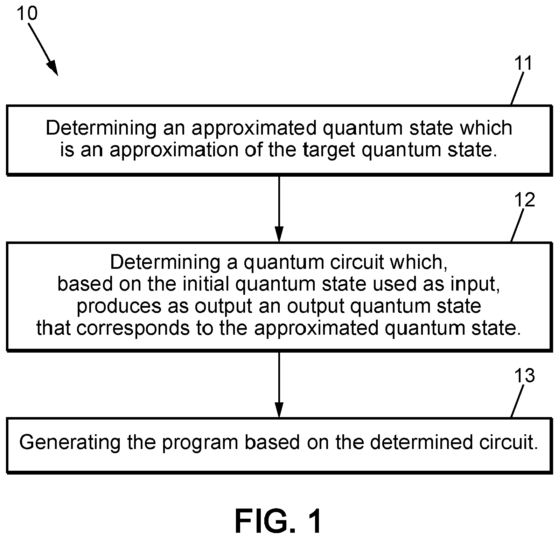

Fig. 1 shows a block diagram illustrating the generating (10) of a program that is executable on a quantum computer according to embodiments of the present subject disclosure.

Such generating may be implemented by a computer system, e.g. at a processing node of a computer system.

The computer system is provided with data describing a target quantum state denoted $|\psi_{target}\rangle$, and may be configured for determining (11) an approximated quantum state, denoted $|\widetilde{\psi_{target}}\rangle$, which is an approximation of the target quantum state $|\psi_{target}\rangle$.

Once the target quantum state $|\psi_{target}\rangle$ has been approximated through the approximated quantum state $|\widetilde{\psi_{target}}\rangle$, a quantum circuit may be determined (12) which, based on an initial quantum state (e.g. $|0\rangle$) used as input applied to the quantum circuit, produces as output an output quantum state that corresponds to the approximated quantum state $|\widetilde{\psi_{target}}\rangle$. For example, in some embodiments, the quantum circuit may be determined so that the output quantum state approximates the approximated quantum state $|\widetilde{\psi_{target}}\rangle$.

A program to be executed using a quantum computer may then be generated (13) based on the determined quantum circuit.

The proposed scheme therefore advantageously allows determining a quantum circuit based on which a program to be executed using a quantum computer can be generated by approximating a target quantum state $|\psi_{target}\rangle$, instead of directly approximating the quantum circuit to be determined.

Depending on the embodiments, the approximated quantum state may be determined using a simulation of an input quantum circuit or using a representation of the target quantum state $|\psi_{target}\rangle$. That is, depending on the embodiment, the approximated quantum state may be determined based on the target quantum state using the target quantum state or using an input quantum circuit.

In one or more embodiments, the approximated quantum state may be determined using a representation of the target quantum state $|\psi_{target}\rangle$.

For example, a pure quantum state $|\psi\rangle$ can be represented as a linear combination of basis states $|\sigma\rangle$ of the 1-qbit Hilbert space (i.e. $|\sigma\rangle \in \{|0\rangle, |1\rangle\}$):

$$|\psi\rangle = \sum_{\sigma_1,\ldots,\sigma_N} C_{\sigma_1,\ldots,\sigma_N} |\sigma_1\rangle \otimes \ldots \otimes |\sigma_N\rangle \quad (1)$$

where $C_{\sigma_1,\ldots,\sigma_N}$ is a complex-valued tensor indexed by $\sigma_i \in \{0, 1\}$. This form may in some embodiments be used to obtain a representation of the target quantum state $|\psi_{target}\rangle$.

In some embodiments, the representation of the target quantum state may be of the Matrix Product State, MPS, type.

For example, in some embodiments, a decomposition of the pure quantum state $|\psi\rangle$ as a Matrix Product State, therefore a MPS decomposition of the pure quantum state $|\psi\rangle$, of the following form:

$$|\psi\rangle = \sum_{\substack{\sigma_1,\ldots,\sigma_N \\ \chi_0,\ldots,\chi_N}} A^{[1]\sigma_1}_{\chi_0,\chi_1} A^{[2]\sigma_2}_{\chi_1,\chi_2} \ldots A^{[N]\sigma_N}_{\chi_{N-1},1} |\sigma_1\rangle \otimes \ldots \otimes |\sigma_N\rangle \quad (2)$$

may be used to obtain a representation of the target quantum state $|\psi_{target}\rangle$. The terms $A^{[n]\sigma_i}_{\chi_{i-1},\chi_i}$ are obtained via successive singular value decomposition of the $C_{\sigma_1,\ldots,\sigma_N}$ tensor defined above, with $\chi_i$ the bond dimension between each tensors.

Therefore, in some embodiments, a representation of the target quantum state $|\psi_{target}\rangle$ of the following form:

$$|\psi_{target}\rangle = \sum_{\sigma_1,\ldots,\sigma_N} C_{\sigma_1,\ldots,\sigma_N} |\sigma_1\rangle \otimes \ldots \otimes |\sigma_N\rangle \quad (3)$$

may be used, and the approximated quantum state may be obtained based on a MPS decomposition (for example determined based on the above representation (3) of the target quantum state $|\psi_{target}\rangle$ of the following form:

$$|\widetilde{\psi_{target}}\rangle = \sum_{\substack{\sigma_1,\ldots,\sigma_N \\ \chi_0,\ldots,\chi_N}} A^{[1]\sigma_1}_{\chi_0,\chi_1} A^{[2]\sigma_2}_{\chi_1,\chi_2} \ldots A^{[N]\sigma_N}_{\chi_{N-1},1} |\sigma_1\rangle \otimes \ldots \otimes |\sigma_N\rangle \quad (4)$$

where the $\chi_i$ are bond dimensions, and each $\chi$ is bounded by a maximum bond dimension $\chi_{max}$ such that $\chi < \chi_{max}$.

In some embodiments, the MPS decomposition may be obtained via successive singular value decomposition (SVD) of the above representation (3) of the target quantum state $|\psi_{target}\rangle$). This leads to a product of tensors, separated by bond dimensions $\chi$.

The maximum bond dimension $\chi_{max}$ may be defined as the bond dimension for which the corresponding MPS representation exactly represents the target quantum state $|\psi_{target}\rangle$). In some embodiments, choosing a bond dimension $\chi$ which is smaller than the maximum bond dimension $\chi_{max}$ allows obtaining an approximation of the target quantum state with limited computation complexity.

Indeed, the bond dimension $\chi$ grows exponentially with the number of qubits. As a consequence, the contraction of the term ( $A^{[1]\sigma_1}_{\chi_0,\chi_1} A^{[2]\sigma_2}_{\chi_1,\chi_2} \ldots A^{[N]\sigma_N}_{\chi_{N-1},1}$ ) is also exponential. However, limiting the bond dimension $\chi$ to a value chosen smaller than the maximum bond dimension Xmax ($\chi < \chi_{max}$) advantageously allows obtaining an approximation $|\widetilde{\psi_{target}}\rangle$ of the target quantum state $|\psi_{target}\rangle$ which requires only $\mathcal{O}(N\chi^2_{max})$ scalar values. Therefore, in some embodiments, by choosing a maximum bond dimension $\chi_{max}$ such that all bond dimensions are lower than $\chi_{max}$, one can advantageously ensure that the description of the MPS approximation of the target quantum state $|\psi_{target}\rangle$ scales polynomially.

In one or more embodiments, the approximated quantum state $|\widetilde{\psi_{target}}\rangle$ may be determined using an input quantum circuit. For example, in some embodiments, the approximated quantum state $|\widetilde{\psi_{target}}\rangle$ may be determined using a simulation of an input quantum circuit.

Using a quantum circuit which prepares an approximated quantum state $|\widetilde{\psi_{target}}\rangle$ is advantageous because using a quantum circuit which exactly prepare the quantum state $|\psi_{target}\rangle$ is considered very complex and therefore difficult to implement practically. In particular, the scheme typically used to represent in a quantum computer a state $|\Psi\rangle$ starting from an initial state is by designing a set of gates which, applied on the initial state, generate this state $|\Psi\rangle$ in the quantum computer, and the generation of this set of gates is considered very computationally expensive. In addition, describing the quantum state as a complex vector is inherently inefficient as it comes at an exponential cost.

The main reason for this is that constructing a circuit which prepares exactly $|\psi_{target}\rangle$ scales exponentially with the number of qubits.

Therefore, in some embodiments, one is given a description of a sequence of n gates $U_1 \ldots U_n$ acting on one or two qubits based on an initial quantum state (e.g. $|0\rangle$) and such that:

$$|\psi_{target}\rangle = U_n \cdots U_1 |0\rangle$$

In that setting, one cannot compute the successive SVD decomposition described above, unless the gate sequence is first simulated, which comes with an exponential computation cost in the general setting.

In some embodiments, the approximated quantum state $|\widetilde{\psi_{target}}\rangle$ may be obtained by using a so-called MPS simulation technique, which comprises executing instances of a loop initialized with a MPS decomposition representation of the initial quantum state (e.g. 10)), each instance operating an update of the representation generated by the previous instance by applying a corresponding gate of the sequence of n gates $U_1 \ldots U_n$.

The MPS simulation technique advantageously allows determining a MPS approximation of the target quantum state $|\psi_{target}\rangle$ without having access to a full representation of such target quantum state $|\psi_{target}\rangle$.

In some embodiments, a maximum bond dimension $\chi_{max}$ may be used as described above, so that the computational complexity of the MPS simulation technique scales as $\mathcal{O}(n\chi_{max}^2)$ where *n* is the number of gates in the input quantum circuit (neglecting the initial $\mathcal{O}(N)$ cost).

Therefore, in some embodiments, an input quantum circuit described by a sequence of gates acting on one or more qubits may be used to determine the approximated quantum state $|\widetilde{\psi_{target}}\rangle$, and the method may further comprise: determining a representation of the initial quantum state (e.g. 10)), and iteratively updating the representation by successively applying a gate of the sequence of gates to the representation, and determining a representation of the approximated quantum state $|\widetilde{\psi_{target}}\rangle$ based on the updated representation of the initial quantum state.

Advantageously, embodiments using a quantum circuit for obtaining the approximated quantum state $|\widetilde{\psi_{target}}\rangle$ may be used for implementing the proposed scheme for large target quantum states that would be typically untractable.

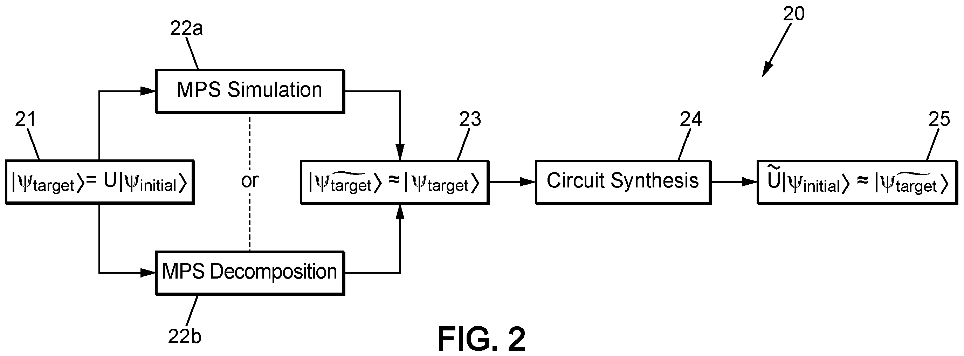

Fig. 2 shows a flow chart diagram illustrating the generating (20) of a program that is executable on a quantum computer according to embodiments of the present subject disclosure.

As described with reference to Fig. 1, in one or more embodiments the generating of a program that is executable on a quantum computer may be performed through generating a quantum circuit U that corresponds to the program, assuming an initial quantum state on which the quantum circuit is applied.

Indeed, a quantum program may be represented by a corresponding quantum circuit U which produces, based on its application on the initial quantum state ($|\psi_{initial}\rangle$), a desired target quantum state ($|\psi_{target}\rangle = U|\psi_{initial}\rangle$) that would be produced as output by the program when executed using a quantum computer based on the initial quantum state ($|\psi_{initial}\rangle$) used as input.

Therefore, in one or more embodiments, assuming that a desired program can be generated based on a corresponding quantum circuit and an initial quantum state, the generating of the program may be achieved through the generating of the corresponding circuit. As a consequence, in some embodiments, the proposed scheme aims at determining a quantum circuit U which results in a given target quantum state $|\psi_{target}\rangle$ when applied to a given initial quantum state $|\psi_{initial}\rangle$.

As illustrated in Fig. 2, the quantum circuit U to be generated may be represented by the target quantum state $|\psi_{target}\rangle$ that would be obtained by applying the quantum circuit *U* to an initial quantum state $|\psi_{initial}\rangle$: $|\psi_{target}\rangle = U|\psi_{initial}\rangle$ (21). The proposed scheme may therefore use the target quantum state $|\psi_{target}\rangle$ as input data, that is, the target quantum state may be used as input for the generation of the circuit U.

In one or more embodiments, given an initial quantum state $|\psi_{initial}\rangle$, an approximated quantum state $|\widetilde{\psi_{target}}\rangle$ which is an approximation of the target quantum state may be determined (23) based on the target quantum state $|\psi_{target}\rangle$, for example using, depending on the embodiment, MPS simulation (22a) (using an input quantum circuit) of the target quantum state $|\psi_{target}\rangle$, or through MPS decomposition (22b) (using a representation of the target quantum state) of the target quantum state $|\psi_{target}\rangle$.

For example, in some embodiments, the target quantum state $|\psi_{target}\rangle$ may be cast into its MPS form (either directly (MPS decomposition 22b) or, depending on the embodiment, via an MPS simulation of an input quantum circuit (MPS simulation 22a)), with a bond dimension $\chi$ bounded by a maximum bond dimension $\chi_{max}$, as follows:

$$|\widetilde{\psi_{target}}\rangle = \sum_{\substack{\sigma_1,\dots,\sigma_N \\ \chi_0,\dots,\chi_N}} A^{[1]\sigma_1}_{\chi_0,\chi_1} A^{[2]\sigma_2}_{\chi_1,\chi_2} \dots A^{[N]\sigma_N}_{\chi_{N-1},1} |\sigma_1\rangle \otimes \dots \otimes |\sigma_N\rangle, \quad \chi < \chi_{max} \quad (5)$$

The terms $A^{[n]\sigma_i}_{\chi_{i-1},\chi_i}$ are obtained via successive singular value decomposition of the $C_{\sigma_1,\dots,\sigma_N}$ tensor defined previously, with $\chi_i$ the bond dimension between each tensors. The term $|\sigma_j\rangle$ are the eigenstates. The system is described by $N$ qubits.

As described above, choosing a bond dimension $\chi$ which is smaller than a maximum bond dimension $\chi_{max}$ leads to determining a representation of an approximated quantum state $|\widetilde{\psi_{target}}\rangle$ which is an approximation of the target quantum state $|\psi_{target}\rangle$, instead of a representation of the target quantum state $|\psi_{target}\rangle$ itself which would correspond to the same form of MPS representation, however with a bond dimension $\chi$ equal to the maximum bond dimension $\chi_{max}$.

In one or more embodiments, once an approximated quantum state $|\widetilde{\psi_{target}}\rangle$ has been determined based on the target quantum state $|\psi_{target}\rangle$, a circuit synthesis scheme may be performed (24) in order to determine a quantum circuit $\tilde{U}$ which, based on the initial quantum state used as input, would produce as output an output quantum state that corresponds to the approximated quantum state $|\widetilde{\psi_{target}}\rangle$ when applied to the initial quantum state $|\psi_{initial}\rangle$.

In some embodiments, the circuit synthesis scheme may aim at determining a quantum circuit $\tilde{U}$ which, based on the initial quantum state $|\psi_{initial}\rangle$ used as input, would produce as output an output quantum state which is the approximated quantum state $|\widetilde{\psi_{target}}\rangle$ when applied to the initial quantum state $|\psi_{initial}\rangle$ : $\tilde{U}|\psi_{initial}\rangle = |\widetilde{\psi_{target}}\rangle$.

In other embodiments, the circuit synthesis scheme may aim at determining a quantum circuit $\tilde{U}$ which, based on the initial quantum state $|\psi_{initial}\rangle$ used as input, would produce as output an output quantum state which is an approximation of the approximated quantum state $|\widetilde{\psi_{target}}\rangle$ : $\tilde{U}|\psi_{initial}\rangle \approx |\widetilde{\psi_{target}}\rangle$ (25). Indeed, in such embodiments, the determining such approximation of the approximated quantum state $|\widetilde{\psi_{target}}\rangle$ may be performed using less computationally complex methods, so that using such approximation may be considered advantageous and deemed sufficiently satisfactory for purposes of generating the desired quantum circuit or an approximation thereof.

In one or more embodiments, a circuit synthesis method may be used that determines a specific type of quantum circuits which are typically indifferently referred to as "parameterized circuit", "ansatz", or "circuit ansatz".

In one or more embodiments, the determining of the quantum circuit $\tilde{U}$ may comprise the determining of parameters of a parameterized circuit which are represented by a tensor network, TN.

Depending on the embodiment, the ansatz used may for example be of a first type known as the "variational ansatz" type, or of a second type known as the "hardware efficient ansatz" type.

For example, in some embodiments, a parameterized circuit ansatz represented by $U(\theta_0, \dots, \theta_L)$, with $L + 1$ parameters $\theta_0, \dots, \theta_L$, may be chosen.

Then, the parameterized circuit may be applied to the initial quantum state $|\psi_{initial}\rangle$ (e.g. $|0\rangle$), for example represented in MPS form, to produce a tensor network quantum state $|\psi_{TN}(\theta_0, \dots, \theta_L)\rangle$ as follows:

$$|\psi_{TN}(\theta_0, \dots, \theta_L)\rangle = \langle\psi_{initial}|U(\theta_0, \dots, \theta_L) \quad (6)$$

In some embodiments, the tensor network quantum state $|\psi_{TN}(\theta_0, \dots, \theta_L)\rangle$ may advantageously be used to define a cost function that measures a distance between the tensor network quantum state $|\psi_{TN}(\theta_0, \dots, \theta_L)\rangle$ and the target quantum state or the approximated target quantum state.

Defining such a cost function advantageously allows reducing the circuit synthesis scheme into an optimization problem which can be addressed using various conventional optimization algorithms.

For example, in some embodiments, a cost function *L* may be defined based on the target quantum state $|\psi_{target}\rangle$, and the tensor network quantum state $|\psi_{TN}(\theta_0, ..., \theta_L)\rangle$, as follows:

$$\mathcal{L}(\psi_{target}, \Psi_{TN}) = 1 - |\langle \Psi_{TN}|\psi_{target}||\rangle|^2 = 1 - |\langle\psi_{initial}|U(\theta)|\psi_{target}\rangle|^2$$

The proposed circuit synthesis scheme therefore includes in some embodiments an optimization scheme for determining the values of the parameters of the parameterized circuit that correspond to an optimum (e.g. a minimum) of the cost function.

Depending on the embodiment, various methods may be chosen for determining the optimum values of the parameters of the parameterized circuit.

For example, in some embodiments, the cost function may be minimized using a gradient-descent algorithm. As another example, in some embodiments, the cost function may be minimized using a backpropagation optimization algorithm.

Using an optimization algorithm, such as a backpropagation optimization algorithm, provides the advantage of benefiting from the developments and advances made in the field of machine learning optimization algorithms for implementing in embodiments the proposed parameterized quantum circuit optimization.

In embodiments using a backpropagation optimization algorithm, the following operations may for example be performed:

Differentiate the cost function with respect to the previous tensors it was computed with using the derivative chain rule. This advantageously allows for the tweaking of the parameters themselves in such a way that the cost function becomes smaller. This operation corresponds to the backpropagation part of the algorithm.

Compute the new cost function (forward propagation), and backpropagate the gradients again, and so on and so forth.

The optimization process ends once the loss function is minimal, at which point it may be considered that the parameters of the parameterized circuit have been properly optimized.

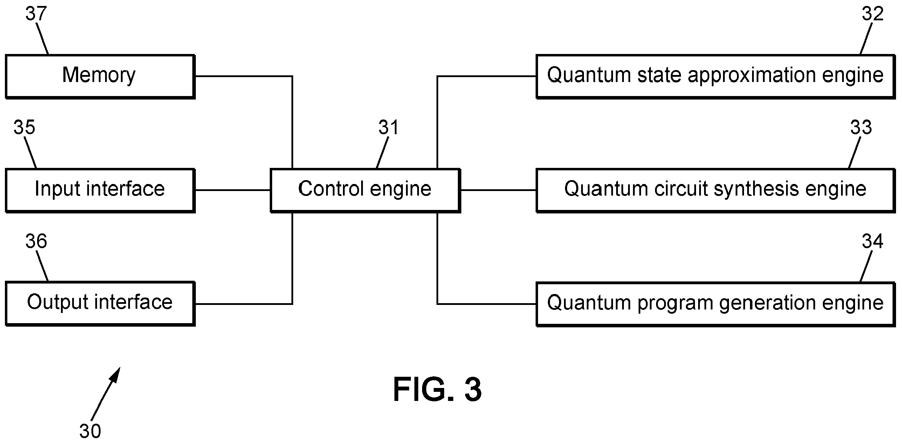

An exemplary architecture of a non-quantum computer apparatus according to the present subject disclosure is illustrated on Fig. 3, which shows a non-quantum computer apparatus (30) configured to perform a method for generating a quantum computer program in accordance with embodiments of the present subject disclosure.

The computer apparatus 30 includes a control engine 31, a quantum state approximation engine 32, a quantum circuit synthesis engine 33, a quantum program generation engine 34, an input interface 35, an output interface 36, and a memory 37.

In the architecture illustrated on Fig. 3, all of the quantum state approximation engine 32, quantum circuit synthesis engine 33, quantum program generation engine 34, input interface 35, output interface 36, and memory 37 are operatively coupled with one another through the control engine 31.

In some embodiments, the input interface 35 is configured for receiving data representing an initial quantum state and a target quantum state, and transmitting received data to the control engine 31 for further processing according to embodiments of the present subject disclosure.

In some embodiments, the output interface 36 is configured for outputting data representing a program generated according to embodiments of the present subject disclosure, and transmitting such data to an external host.

In some embodiments, the quantum state approximation engine 32 is configured to process received data representing an initial quantum state (in most cases, the initial state is considered sufficiently simple to represent, so that no approximation thereof, for example by putting an initial state into an MPS form, is deemed necessary, so that in some embodiments only the target quantum state will require approximation) and a target quantum state, and may in particular be configured for determining an approximated quantum state based on the target quantum state, for example, depending on the embodiment, using a representation of the target quantum state (e.g. a representation that uses a MPS decomposition of the target quantum state), or using a representation of an input quantum circuit configured for preparing the target quantum state (e.g. using a MPS simulation of the target quantum state).

In some embodiments, the quantum circuit synthesis engine 33 provides a quantum circuit synthesis function. In particular, in one or more embodiments, the quantum circuit synthesis engine 33 may be configured for, based on the approximated quantum state determined by the quantum state approximation engine 32, synthesizing a quantum circuit which, based on the initial quantum state used as input, produces as output an output quantum state that corresponds to (e.g. approximates) the approximated quantum state. In some embodiments, the quantum circuit synthesis engine 33 may be configured to perform circuit synthesis operations that involve calculating a cost function and performing an optimization algorithm, and may further be configured to, depending on the embodiment, generate optimal parameters of a chosen circuit model, or to generate an optimal circuit, in each case providing a quantum circuit that is configured for generating the target quantum state. In such embodiments, the quantum circuit synthesis engine 33 may include a cost function calculation engine and an optimization engine (non represented on Fig. 3).

**EP 4 343 640 A1**

In some embodiments, the quantum program generation engine 34 may be configured to generate a quantum computing program, that is, a program to be executed using a quantum computer, based on the quantum circuit determined by the quantum circuit synthesis engine 33.

The control engine 31 includes a processor, which may be any suitable microprocessor, microcontroller, Field Programmable Gate Arrays (FPGA), Application Specific Integrated Circuits (ASIC), Digital Signal Processing chip, and/or state machine, or a combination thereof. According to various embodiments, one or more of the computers can be configured as a multi-processor computer having multiple processors for providing parallel computing. The control engine 31 may also comprise, or may be in communication with, computer storage media, such as, without limitation, the memory 32, capable of storing computer program instructions or software code that, when executed by the processor, cause the processor to perform the elements described herein. In addition, the memory 32 may be any type of data storage or computer storage medium coupled to the control engine 31 and operable with the interfaces 35 - 36 to facilitate management of data stored in association therewith, such as, for example, a cache memory, a data farm, a data warehouse, a data mart, a datacenter, a data cloud, or a combination thereof.

It will be appreciated that the computer apparatus 30 shown and described with reference to Fig. 3 is provided by way of example only. Numerous other architectures, operating environments, and configurations are possible. Other embodiments of the node may include fewer or greater number of components, and may incorporate some or all of the functionality described with respect to the processing node components shown in Fig. 3. Accordingly, although the control engine 31, quantum state approximation engine 32, quantum circuit synthesis engine 33, quantum program generation engine 34, input interface 35, output interface 36, and memory 37 are illustrated as part of the system 30, no restrictions are placed on the location and control of components 30 - 37. In particular, in other embodiments, components 30 - 37 may be part of different entities or computing systems.

In particular, the computer apparatus 30 may be a non-quantum computer, a network of non-quantum computers, a multi-processing core non-quantum computer (e.g. comprising one or more Graphic Processing Units), an electronic component, or any other device comprising a processor operatively coupled with a memory.

The computer apparatus 30, and more generally any device configured for implementing embodiments of the present subject disclosure, may be implemented in software, in hardware, such as for example in an ASIC component, or in a combination of software and hardware, such as for example as a computer program designed to be loaded and executed on a FPGA device.

Although this subject disclosure has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and sub-combinations of the features and aspects can be made and still fall within the scope of the subject disclosure. Furthermore, the systems and devices described above need not include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

**Claims**

1.  A computer-implemented method for generating a program, wherein the program is to be executed using a quantum computer for producing as output a target quantum state based on an initial quantum state used as input, the method comprising:

    • Determining an approximated quantum state which is an approximation of the target quantum state;
    • Determining a quantum circuit which, based on the initial quantum state used as input, produces as output an output quantum state that corresponds to the approximated quantum state; and
    • Generating the program based on the determined quantum circuit.

2.  The method according to claim 1, wherein the approximated quantum state is determined using a simulation of an input quantum circuit.

3. The method according to claim 2, wherein the input quantum circuit is described by a sequence of gates acting on one or more qubits, the method further comprising: determining a representation of the initial quantum state, and iteratively updating the representation by successively applying a gate of the sequence of gates to the representation, and determining a representation of the approximated quantum state based on the updated representation of the initial quantum state.

4. The method according to claim 1, wherein the approximated quantum state is determined using a representation of the target quantum state.

5. The method according to any of claims 2 to 4, wherein the representation of the target quantum state is of the matrix product state, MPS, type.

6. The method according to claim 5, wherein the target quantum state is represented as a linear combination of basis states $|\sigma_i\rangle$ that each belong to the set $\{|0\rangle, |1\rangle\}$, of the following form:

$$|\psi_{target}\rangle = \sum_{\sigma_1,...,\sigma_N} C_{\sigma_1,...,\sigma_N} |\sigma_1\rangle \otimes ... \otimes |\sigma_N\rangle,$$

where $C_{\sigma_1,...,\sigma_N}$ is a complex-valued tensor indexed by $\sigma_i \in \{0, 1\}$,
and the approximated quantum state is of the following MPS form:

$$|\widetilde{\psi_{target}}\rangle = \sum_{\substack{\sigma_1,...,\sigma_N \\ \chi_0,...,\chi_N}} A^{[1]\sigma_1}_{\chi_0,\chi_1} A^{[2]\sigma_2}_{\chi_1,\chi_2} ... A^{[N]\sigma_N}_{\chi_{N-1},1} |\sigma_1\rangle \otimes ... \otimes |\sigma_N\rangle$$

wherein the terms $A^{[n]\sigma_i}_{\chi_{i-1},\chi_i}$ are obtained via successive singular value decomposition of the $C_{\sigma_1,...,\sigma_N}$ tensor, $\chi_i$ is a bond dimension between each tensors, and each $\chi_i$ is bounded by a maximum bond dimension $\chi_{max}$: $\chi_i < \chi_{max}$.

7. The method according to any of the previous claims, further comprising, for determining the quantum circuit: determining parameters of a parameterized circuit represented by a tensor network, TN.

8. The method according to claim 7, further comprising, for determining the parameters of the parameterized circuit: Minimizing a cost function that measures a distance between a tensor network quantum state produced by the parameterized circuit receiving as input the initial quantum state, and the target quantum state or the approximated quantum state.

9. The method according to claim 8, wherein the cost function is minimized using a gradient-descent propagation algorithm.

10. The method according to any of claims 8 and 9, wherein the cost function is minimized using a backpropagation optimization algorithm.

11. The method according to any of the previous claims, wherein the initial quantum state is $|0\rangle$.

12. An non-quantum computer apparatus, the apparatus comprising a processor and a memory operatively coupled to the processor, wherein the apparatus is configured to perform a method according to any of claims 1 to 11.

13. A quantum computer configured to execute a program generated by performing a method according to any of claims 1 to 11.

14. A computer program product comprising computer program code tangibly embodied in a computer readable medium, said computer program code comprising instructions to, when provided to a non-quantum computer system and executed, cause said computer to perform a method according to any of claims 1 to 11.

15. A data set representing, for example through compression or encoding, a computer program product according to claim 14.

10

11

Determining an approximated quantum state which
is an approximation of the target quantum state.

12

Determining a quantum circuit which,
based on the initial quantum state used as input,
produces as output an output quantum state
that corresponds to the approximated quantum state.

13

Generating the program based on the determined circuit.

## FIG. 1

FIG. 2

FIG. 3

Europäisches
Patentamt

European
Patent Office

Office européen
des brevets

# EUROPEAN SEARCH REPORT

Application Number

EP 22 30 6398

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/057957 A1 (JOHNSON PETER D [US] ET AL) 20 February 2020 (2020-02-20) * abstract * * paragraph [0044] – paragraph [0046] * * paragraph [0113] – paragraph [0117] * ----- | 1-15 | INV. G06N10/20 G06N10/80 G06N3/042 G06N10/60 |
| X | PENG-FEI ZHOU ET AL: "Automatically Differentiable Quantum Circuit for Many-qubit State Preparation", ARXIV.ORG, CORNELL UNIVERSITY LIBRARY, 201 OLIN LIBRARY CORNELL UNIVERSITY ITHACA, NY 14853, 30 April 2021 (2021-04-30), XP081947070, * the whole document * ----- | 1-15 | ADD. G06N3/084 |

TECHNICAL FIELDS
SEARCHED      (IPC)

G06N

The present search report has been drawn up for all claims

| Place of search | Date of completion of the search | Examiner |
|---|---|---|
| The Hague | 9 February 2023 | Papadakis, Georgios |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 30 6398

This annex lists the patent family members relating to the patent documents cited in  the above-mentioned European search report.
The members are as contained in the European Patent Office EDP file on
The European Patent Office is in no way liable for these particulars which are merely given for the purpose of information.

09-02-2023

| Patent document cited in search report | | Publication date | Patent family member(s) | | Publication date |
|---|---|---|---|---|---|
| US 2020057957 | A1 | 20-02-2020 | AU | 2019321613 A1 | 25-02-2021 |
| | | | CA | 3109643 A1 | 20-02-2020 |
| | | | EP | 3837646 A1 | 23-06-2021 |
| | | | US | 2020057957 A1 | 20-02-2020 |
| | | | WO | 2020037253 A1 | 20-02-2020 |

For more details about this annex : see Official Journal of the European Patent Office, No. 12/82